# EUROPÄISCHE PATENTANMELDUNG

(11) **EP 1 703 428 A2**
(43) Veröffentlichungstag der Anmeldung: **20.09.2006**
(21) Anmeldenummer: 06004179.5
(22) Anmeldetag: 02.03.2006
(51) Int. Cl.: G06F 17/50

(54) **System und Verfahren zur Prozessdatensimulation**

(30) Priorität: 18.03.2005 DE 102005013080
(71) Anmelder: ABB PATENT GmbH, 68526 Ladenburg (DE)
(72) Erfinder: Veryha, Yauheni, Dipl.-Ing., 68151 Mannheim (DE); Gauder, Markus, Dipl. Ing. (FH), 68723 Schwetzingen (DE); Kautsch, Stephan, Dipl.-Ing., 67454 Haßloch (DE); Grein, Walter, Dr. rer. nat., 68259 Mannheim (DE)
(74) Vertreter: Miller, Toivo

(57) **Zusammenfassung**

Die Erfindung bezieht sich auf ein System und ein Verfahren zur Prozessdatensimulation in einem SCADA(Supervisory Control and Data Acquisition)-System, wobei das SCADA-System wenigstens einen SCADA-Server (14) und wenigstens einen SCADA-Client (1) aufweist, die über eine erste Netzwerk-Verbindung (10) miteinander verbunden sind, und Mittel (24, 26, 27, 28) zur Kommunikation mit Sensoren und Aktoren (29) eines zu steuernden Prozesses und zur Erfassung von Prozessdaten vorhanden sind. Alle vorhandenen SCADA-Server (14), und auch alle vorhandenen SCADA-Clients (1) enthalten jeweils ein Simulationsmodul (6, 17, 30, 65). Die Simulationsmodule (6, 17, 30, 65) haben jeweils Mittel (40) zur Simulation des zu steuernden Prozesses, Mittel (48) zur Berechnung von Prozesswerten, Mittel (46) zur Speicherung von Simulationsdaten, Mittel (59) zum Konfigurieren der Simulationsmittel (40), ein erstes API(Application Programming Interface) (50) für externe Simulationsanwendungen und ein zweites API (54) für den Zugriff auf Simulationsdaten und die Simulationssteuerung. Das mit dieser Anordnung durchführbare Verfahren ermöglicht Benutzern die Wahl unterschiedlicher Simulationsmodi und u. a. eine automatisierte Fehlerbehebung in den Simulationsmitteln (40).

Bezugszeichenliste
- 1: SCADA-Client
- 2: Anwendungen des SCADA-Clients
- 3: Kommunikationsverbindung
- 4: SCADA-Prozessdatenclient
- 5: -
- 6: Simulationsmodul im Client
- 7: Verbindung
- 8: Verbindung
- 9: zweite Netzwerk-Verbindung
- 10: erste Netzwerk-Verbindung
- 11: Verbindung
- 12: Verbindung
- 13: Verbindung
- 14: SCADA-Server
- 15: SCADA-Prozessdatenserver im SCADA-Server
- 16: Verbindung
- 17: Simulationsmodul im SCADA-Server
- 18: Verbindung
- 19: Anwendung im SCADA-Server
- 20: Echtzeit-Datenbank im SCADA-Server
- 21: Kommunikationsverbindung
- 22: Kommunikationsverbindung
- 23: Verarbeitungseinheit im SCADA-Server
- 24: Prozessanbindungsmodul
- 25: dritte Netzwerk-Verbindung
- 26: vierte Netzwerk-Verbindung
- 27: Controller im E/A-Gerät
- 28: Elektrische Schnittstelle
- 29: Sensoren und Aktoren des Prozesses
- 30: Simulationsmodul im SCADA-Simulationsserver
- 31: SCADA-Prozessdatenserver im SCADA-Simulationsserver
- 32: Anwendungen im SCADA-Simulationsserver
- 33: Echtzeit-Datenbank im SCADA-Simulationsserver
- 34: SCADA-Simulationsserver
- 35: Verarbeitung im SCADA-Simulationsserver
- 36: Verarbeitung im SCADA-Simulationsserver
- 37: Verbindung
- 38: Kommunikationsverbindung
- 39: Verbindung
- 40: Simulationsmodell
- 41: Software-Objekt
- 42: Verbindung
- 43: Externe Simulationsanwendung
- 44: Verbindung
- 45: Verbindung
- 46: Simulationsdaten-Cache
- 47: Verbindung
- 48: Simulations-Engine
- 49: Verbindung
- 50: Erstes API
- 51: Gestrichelte Linie
- 52: Gestrichelte Linie
- 53: Gestrichelte Linie
- 54: Zweites API
- 55: Verbindung
- 56: Verbindung
- 57: Gestrichelte Linie
- 58: Gestrichelte Linie
- 59: Simulations-Manager
- 60: Verbindung
- 61: Verbindung
- 62: SCADA-Anwendung
- 63: Verbindung
- 64: SCADA-Prozessdatenquelle
- 65: Simulationsmodul
- 66 - 75: Blöcke des Algorithmus zur Fehlerbehebung
- 76 - 81: Blöcke des Algorithmus zur Initialisierung des Simulationsmoduls
- 82 - 87: Blöcke des Algorithmus zum Beenden des Simulationsmodus
- 88: Prozessdatenquelle des SCADA-Clients
- 89: Simulationsmodul
- 90: Simulationsarchiv
- 91: SCADA-Client
- 92: SCADA-Server
- 93: Prozessdatenquelle
- 94: Verbindung
- 95: Simulationsdaten-Anforderung
- 96: Anforderung
- 97: Antwort
- 98: Antwort
- 99: Antwort
- 100: Verbindung
- 101: Anforderung
- 102: Antwort
- 103: Antwort
- 104: SCADA-Anwendung
- 105: Anforderung
- 106: Antwort
- 107: Standard-Verbindung
- 108: API
- 109: Verbindung
- 110: Verbindungsmodul
- 111: Verbindung
- 112: Externe Simulationsanwendung
- 113: Software-Objekt
- 114: Simulationsmodell
- 115: SCADA-Simulationsmodul

## Beschreibung

Die Erfindung bezieht sich auf ein System zur Prozessdatensimulation in einem SCADA(Supervisory Control and Data Acquisition)-System, das im Rahmen eines Prozessleitsystems, insbesondere eines Netzleitsystems anwendbar ist. Außerdem bezieht sich die Erfindung auf ein Verfahren zum Betreiben eines solchen Systems.

Netzleitsysteme werden vielfältig in Versorgungssystemen für z. B. Strom, Gas, Wasser, Öl oder Fernwärme eingesetzt. Dabei stellen Simulationsmöglichkeiten eine wesentliche Funktionalität in Netzleitsystemen dar. Die Simulationsfunktion unterstützt die Planung, Entwicklung und Einrichtung von Netzleitsystemen, sowie deren Betrieb. Sie ermöglicht auf eine sichere Weise die Auswirkungen von Einstellungen und sonstigen beabsichtigten Maßnahmen vorab zu überprüfen, Prozesszustände vorherzusagen, Steuerungssequenzen aufzuzeichnen und zu testen, und Verriegelungsbedingungen zu prüfen.

SCADA-Systeme sind Hardware- und vor allem Software-Systeme zur Prozess-Steuerung und -Regelung, insbesondere zur Prozessdatenerfassung in Echtzeit aus räumlich voneinander entfernten Teilen einer technischen Anlage zur Prozessdurchführung. Eine wesentliche Funktion ist die Generierung von Alarmen, wenn sich gefährliche Prozesszustände abzeichnen. Eine andere Funktion ist die Aufzeichnung aller wesentlichen Ereignisse.

Als Hauptzweck der Simulationsfunktion in einem SCADA-System ist die durch die Simulation gegebene Fähigkeit anzusehen, Tests wie bei einem Online-System durchführen zu können, ohne jedoch eine Verbindung zum realen Prozess oder eine Auswirkung darauf zu haben. Ein Benutzer kann auf einer Anzeige, die derjenigen des realen Prozesses entspricht, beobachten, wie sich von ihm vorgesehene Maßnahmen auswirken werden.

Die Datenbasis einer SCADA-Simulation ist typisch eine Offline-Kopie der realen Datenbasis. Analoge und digitale Punkte im SCADA-Simulationsmodus sind einer Auswahl von SCADA-Signalen ähnlich, wie z. B. Druckwerte, Durchflussraten,Temperaturen und Dichten, Ventilstellungen oder Schalterstellungen, wobei jedoch diese Signale durch ein Simulationsmodell errechnete Punkte sind. Die Anzeigen für einen Bediener sehen ähnlich aus wie Displays zur Anzeige des realen Netzbetriebs. Es sind lediglich die dynamischen Felder von Prozessgraphiken mit simulierten Punkten verbunden, die durch ein Simulationsmodell bereitgestellt werden, also nicht mit dem realen Prozess. Simulations-Szenarien können z. B. aus archivierten realen Zuständen oder Abläufen abgeleitet werden. Simulations-Szenarien können in einer der Realität entsprechenden oder schnelleren Geschwindigkeit ablaufen. Außerdem können simulierte Situationen oder Vorgänge für eine spätere Wiederverwendung jederzeit gespeichert werden. Obwohl Simulationsmodi meistens als Teilfunktion eines SCADA-Systems realisiert werden, werden sie in manchen Fällen auch als externe Komponente implementiert, wodurch diese Simulations-Modi dann in unterschiedlichen SCADA-Systemen einsetzbar sind.

Typische Probleme, die bei bekannten Simulations-Systemen und -Verfahren in Netzleitsystemen auftreten beziehen sich auf Leistungsfähigkeit, Stabilität und vor allem die mangelhafte Möglichkeit eines gleichzeitigen Zugriffs mehrerer Benutzer auf Simulationsmittel. Um einen Simulationsmodus für typische SCADA-Anwendungen zu implementieren, ist eine detaillierte Prozessdaten-Modellierung erforderlich, so dass die gleichen Anzeige- und Steuerungswerkzeuge, die der Benutzer im realen Betrieb verwendet, auch im Simulationsbetrieb einsetzbar sind. Die Prozess-Simulation kann dadurch derart detailliert werden, dass der Start und die Durchführung der Simulation sehr langsam werden. Wenn nicht die richtige Ablaufsequenz gewählt ist, kann der Server oder die Workstation wegen Überlastung der CPU oder des Festplattenspeichers hängen bleiben. Die Stabilität des Simulationsablaufes ist auch stark von der Qualität der zugrundeliegenden Prozessdaten abhängig. Es wäre wünschenswert, dass ein Simulationssystem auch dann stabil bleibt, wenn Prozessdaten fehlerhaft, widersprüchlich oder unvollständig sind. Au-βerdem sollte ein gleichzeitiges Arbeiten mit dem Simulationssystem durch mehrere Benutzer möglich sein, um die jeweils für ihre speziellen Zwecke benötigten Simulationsdaten zu erarbeiten.

Der Erfindung liegt daher die Aufgabe zugrunde, ein System und ein Verfahren zur Prozessdatensimulation anzugeben, welche die vorgenannten Nachteile vermeiden, und insbesondere eine hohe Betriebsstabilität und Mehrfachzugriffsmöglichkeit ermöglichen.

Diese Aufgabe wird durch ein System zur Prozessdatensimulation mit den im Anspruch 1 angegebenen Merkmalen gelöst. Vorteilhafte Ausgestaltungen und ein Verfahren zur Prozessdatensimulation sind in weiteren Ansprüchen angegeben.

Mit der Erfindung wird demnach ein System zur Prozessdatensimulation in einem SCADA-System mit Client-/Server-Architektur vorgeschlagen, wobei wenigstens ein SCADA-Server (primary control server) und ein oder mehrere SCADA-Clients vorhanden sind. Als vorteilhafte Ausgestaltung ist außerdem ein SCADA-Simulationsserver anordenbar. Der SCADA-Server ist mit Ein-/Ausgabe-Geräten verbunden und arbeitet mit aktuellen Prozessdaten. Er ist dafür eingerichtet in bestimmten Zeitabständen oder abhängig von bestimmten Ereignissen Prozessdaten zu archivieren. SCADA-Clients sind Rechnersysteme,in denen eine Client-Software läuft. Diese ermöglicht es Befehle zum SCADA-Server zu senden, Prozessdaten zu visualisieren und andere SCADA-Operationen durchzuführen. SCADA-Clients sind dafür eingerichtet, über eine Netzwerkverbindung sowohl auf aktuelle Prozessdaten, als auch auf archivierte Prozessdaten zuzugreifen. Der optionale SCADA-Simulationsserver ist über Netzwerkverbindungen sowohl mit dem SCADA-Server als auch mit den SCADA-Clients verbunden und ist zur Entlastung des SCADA-Servers geeignet. Alle Server und Clients enthalten ein Simulationsmodul. Die so im System verteilten Simulationsmodule ermöglichen mehreren Benutzern gleichzeitig und unabhängig voneinander Simulationen durchzuführen. Die Simulationsmodule enthalten Simulationsmodelle, in denen Fehlerbehebungsprogramme laufen, womit ein stabiler Simulationsbetrieb erreicht wird.

Das erfindungsgemäße Simulationssystem hat somit eine Reihe von Vorteilen:
- Für Benutzer des Simulationssystems stellt sich dieses als ein Hochleistungssystem dar, das einen schnellen Wechsel zwischen einem Online-Betrieb des SCADA- bzw. Netzleitsystems und einem Simulationsbetrieb ermöglicht, wobei für Simulationszwecke schnell auf aktuelle Online-Daten oder archivierte Prozessdaten zurückgegriffen werden kann.
- Das Simulationssystem ist leicht zu planen und zu konfigurieren. Das System passt sich ohne umfangreiche Konfigurationstätigkeit an Änderungen der realen Anlage an.
- Hohe Stabilität des Simulationssystems durch einen fortschrittlichen Fehleralgorithmus,
- Unterstützung parallel von mehreren Benutzern unabhängig voneinander durchgeführter Simulationen.
- Externe Simulationsanwendungen, auch solche fremder Systeme, können auf einfache Weise in SCADA-Simulationsmodule integriert werden.

Eine weitere Erläuterung der Erfindung und deren Vorteile ergibt sich aus der nachstehenden Beschreibung eines Ausführungsbeispiels anhand von Zeichnungsfiguren.

Es zeigt:
- Fig. 1: die strukturelle Einbettung von Simulationsmodulen in ein SCADA-System,
- Fig. 2: die Architektur eines Simulationsmoduls,
- Fig. 3: einen Algorithmus zur Fehlerbehebung,
- Fig. 4: einen Algorithmus zur Initialisierung eines Simulationsmodus,
- Fig. 5: einen Algorithmus zum Beenden eines Simulationsmodus,
- Fig. 6: ein sequenzielles Diagramm, das die Verfügbarkeit von Simulationsdaten in SCADA-Anwendungen beschreibt, und
- Fig. 7: wie externe Simulationsanwendungen in ein SCADA-Simulationsmodul integriert werden können.

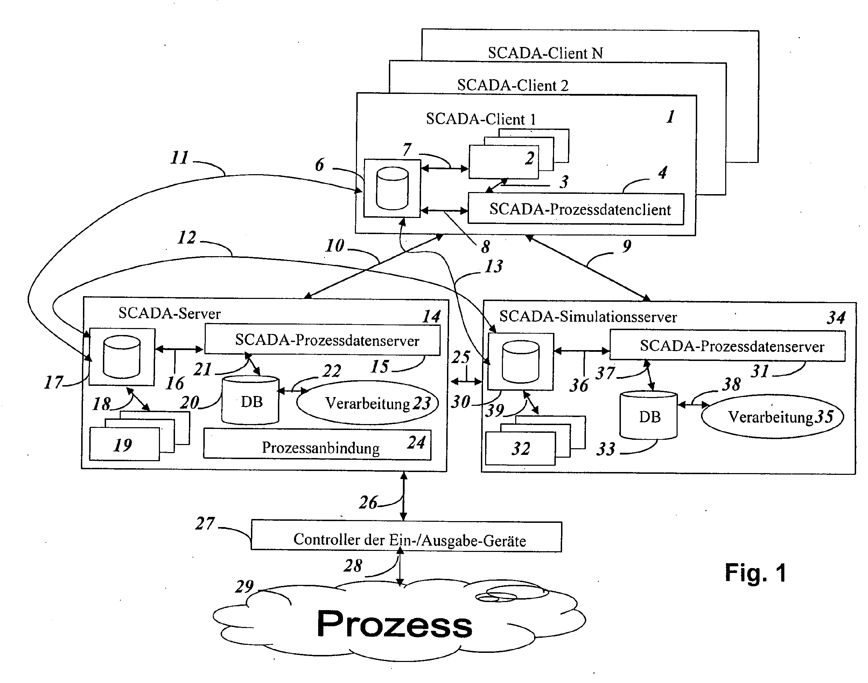

Fig. 1 zeigt die strukturelle Einbettung von Simulationsmodulen 6, 17, 30 in ein SCADA-System, das Teil eines Netzleitsystems ist. Das SCADA-System hat eine Client/Server-Architektur und weist einen SCADA-Server 14 und mindestens einen, im dargestellten Beispiel mehrere SCADA-Clients 1 auf (in Fig. 1 auch mit 1.1 bis 1.N bezeichnet), die auf einem gemeinsamen oder mehreren Rechnern angeordnet sein können. Optional, also als vorteilhafte Ausgestaltung, ist außerdem ein SCADA-Simulationsserver 34 vorhanden. Die Server 14, 34 und die Clients 1 arbeiten mit einem beliebigen Client/Server-Betriebssystem, wie z. B. Windows XP, Windows 2000, Linux Red Hat, UNIX-Compaq. Die Server 14, 34 und die Rechner der Clients 1 sind über erste, zweite und dritte Netzwerkverbindungen 9. 10, 25 miteinander verbunden, und sind für einen Netzwerkbetrieb eingerichtet. Die SCADA-Clients 1 können beispielsweise das TCP/IP-Protokoll zur Kommunikation mit den Servern 14, 34 verwenden, um aktuelle oder simulierte Prozessdaten zu erhalten. Die Server 14, bzw. 34 sind jeweils dafür eingerichtet, folgende SCADA-Kernmodule zu betreiben:
- eine Echtzeitdatenbank 20 bzw. 33 zur Handhabung von Prozessvariablen, die sich auf die Datenakquisition, Alarmbehandlung und die Archivierung beziehen,
- Server-Anwendungen 19 bzw. 32, wie z. B. für Verriegelung, Reihenfolgesteuerung und Markierung, oder auch fremde Anwendungen, die in den Server-Anwendungen 19 bzw. 32 enthalten sind, wie Anwendungen aus dem Prozess, wie z. B. Undichtigkeitserkennung bei Pipelines, oder asset management,
- Verarbeitungseinheiten 23 bzw. 35 für Datenberechnungen,
- SCADA-Prozessdatenserver 15 bzw. 31 zur Bereitstellung von aktuellen Daten und auch simulierten Daten für SCADA-Clients 1 und externe Anwendungen über ein Standard- oder eigenes API (Application Programming Interface), und
- Simulationsmodule 17 bzw. 30, die dafür eingerichtet sind, das Verhalten von Prozess-Objekten zu simulieren, und die unterschiedliche Simulationsarchive enthalten.

Der SCADA-Server 14 enthält außerdem ein Prozessanbindungs-Modul 24 zur Verbindung über eine vierte Netzwerkverbindung 26 mit Controllern 27 in Ein-/Ausgabe-Geräten, wobei ein industrielles Protokoll, wie z. B. Ethernet oder Profibus zum Lesen oder Schreiben von Prozessdaten verwendet wird. Prozessdaten aus dem Prozessanbindungs-Modul 24 werden zur Echtzeitdatenbank 20 transferiert. Die Controller 27 der Ein-/Ausgabe-Geräte sind mit Sensoren und Aktoren (wie Ventile, Schalter und Motoren) 29 des gesteuerten und geregelten Prozesses verbunden, und sind dafür eingerichtet, über eine elektrische Schnittstelle 28 Prozessdaten zu lesen und zu schreiben.

In Fig. 1 sind nur besonders wichtige Kommunikationsverbindungen innerhalb der Server 14 und 34 dargestellt. Tatsächlich können jedoch alle Komponenten über Standard- oder spezielle APls miteinander kommunizieren. Die wichtigsten Verbindungen zwischen den Verarbeitungseinheiten 23 bzw. 35 und den Echtzeitdatenbanken 20 bzw. 33 sind die mit 22 bzw. 38 bezeichneten Verbindungen, sowie zwischen den Echtzeitdatenbanken 20 bzw. 33 und den SCADA-Prozessdatenservern 15 bzw. 31 bestehende Verbindungen 21 bzw. 37.

Über die dritte Netzwerkverbindung 25 können Daten zwischen dem SCADA-Server 14 und dem SCADA-Simulationsserver 34 ausgetauscht werden, sodass deren Prozess- und Systemdaten synchronisiert werden können. Dies kann z. B. erforderlich sein, um die letzten aktuellen Prozessdaten und Systemkonfigurationen vom SCADA-Server 14 zum SCADA-Simulationsserver 34 zu übertragen. Oder umgekehrt um neue Festlegungen im Simulationsmodus, wie Steuersequenzen oder Verriegelungsregeln, vom SCADA-Simulationsserver 34 zum SCADA-Server 14 zu übertragen, damit diese auch im Online-Modus verwendet werden.

SCADA-Clients 1 enthalten jeweils als Kernmodule:
- Anwendungen 2; diese Anwendungen 2 des jeweiligen SCADA-Clients haben ähnliche Funktionen wie oben angegeben für Anwendungen 19, 32 in den Servern 14 und 34.
- Einen SCADA-Prozessdatenclient 4; damit ist ein Modul bezeichnet, das dafür eingerichtet ist, aktuelle Daten von den SCADA-Prozessdatenservern 15 bzw, 31 abzurufen, in einem Cache des Clients zu speichern und zu den Anwendungen zu transferieren.
- Ein Simulationsmodul 6, das dafür eingerichtet ist, Simulationsdaten in den SCADA-Prozessdatenclient 4 zu laden, um auch diese den Anwendungen 2 zur Verfügung zu stellen. Das Simulationsmodul 6 simuliert das Verhalten von Prozess-Objekten und enthält unterschiedliche Simulationsdatenarchive. Das Simulationsmodul 6 kann durch SCADA-Anwendungen 2 gesteuert werden, beispielsweise gestartet, gestoppt oder geändert werden.

Die SCADA-Anwendungen 2 in SCADA-Clients 1 erhalten durch sie angeforderte Prozessdaten vom SCADA-Prozessdatenclient 4 über eine Kommunikationsverbindung 3, die ein Standard- oder eigenes API sein kann. Der SCADA-Prozessdatenclient 4 kann als entfernter Proxy des SCADA-Prozessdatenservern 15 bzw, 31 ausgeführt sein.

Erfindungswesentliche Kernmodule der hier beschriebenen Systemarchitektur sind insbesondere die verteilten Simulationsmodule 6, 17 30, die in jedem Rechner des SCADA-Systems angeordnet sind. Diese Simulationsmodule 6, 17, und 30 sind dafür eingerichtet, ihren Status über Verbindungen 11, 12 und 13 auf Veranlassung durch einen Anwender zu synchronisieren. Diese Anordnung von Simulationsmodulen im System macht die gesamte Simulationsimplementierung sehr flexibel, insbesondere kann man in SCADA-Clients unterschiedliche Simulationsmodi verwenden. Beispielsweise können Anwender der SCADA-Clients folgende Simulationsmodi verwenden:
a) Man kann die Simulationsdaten des Simulationsmoduls 6 eines SCADA-Clients 1 verwenden, das mit dem SCADA-Prozessdatenclient 4 und den Anwendungen 2 über Verbindungen 8 bzw. 7 kommuniziert. In diesem Fall kann das Simulationsmodul 6 sofort die letzten Online-Daten verwenden, die immer beim SCADA-Prozessdatenclient 4 verfügbar sind, wodurch ein Hochleistungsstart der Simulation gewährleistet ist. Das Simulationsmodul 6 kann auch archivierte Prozessdaten in den SCADA-Prozessdatenclient 4 laden, um die Simulation spezieller Prozesszustände zu ermöglichen, z. B. Gefahrensituationen. Anwendungen 2 können über die Verbindung 7 auf das Simulationsmodul 6 zugreifen und Veränderungen vornehmen. Jeder Bediener an den verschiedenen Client-Rechnern kann seinen individuellen Simulationsstatus haben, da die Simulationsmodule 6 in jedem SCADA-Client 1 vorhanden sind.
b) Man kann auch Simulationsdaten des Simulationsmoduls 17 des SCADA-Servers 14 verwenden, das mit dem SCADA-Prozessdatenserver 15 über eine Verbindung 16 kommuniziert, um Online-Prozessdaten in das Simulationsmodul 17 zu laden, und das über eine Verbindung 18 mit den Anwendungen 19 kommuniziert. In diesem Fall wird das Simulationsmodul 6 nur zum entfernten Proxy des Simulationsmoduls 17. Archivierte Prozessdaten sind - wenn sie angefordert werden - automatisch vom Simulationsmodul 17 verfügbar für die Anwendungen 19, den SCADA-Prozessdatenserver 15 und die Simulationsmodule 6. Anwendungen 2 der SCADA-Clients 1 haben durch das jeweilige Simulationsmodul 6 und den jeweiligen SCADA-Prozessdatenclient 4 Zugang zu Simulationsdaten, wobei der SCADA-Prozessdatenclient 4 in diesem Fall auch als entfernter Proxy des SCADA-Prozessdatenservers 15 arbeitet. Jeder SCADA-Client 1 hat Zugang zu den selben Simulationsprozessdaten, die im SCADA-Server 14 verfügbar sind. Daher haben viele Benutzer zugleich Zugang zu den selben Simulationsprozessdaten.
c) Im ansonsten gleichen Szenario wie unter b) beschrieben, wird das Simulationsmodul 30 im SCADA-Simulationsserver 34 verwendet. Es ist vorteilhaft, den SCADA-Simulationsserver 34 anzuordnen und zu verwenden, um den SCADA-Server 14 zu entlasten und dadurch die Gesamtleistung des Systems zu erhöhen. Darüber hinaus kann der SCADA-Simulationsserver 34 als Trainings-Simulator eingesetzt werden, wodurch ebenfalls der SCADA-Server 14 entlastet wird. Simulationsdaten aus dem Simulationsmodul 30 werden in den Simulationsmodulen 6 der SCADA-Clients 1 verfügbar. Das Simulationsmodul 30 des SCADA-Simulationsservers 34 kommuniziert dazu über eine Verbindung 36 mit dem SCADA-Prozessdatenserver 31, und über eine Verbindung 39 mit den Anwendungen 32. In diesem Fall werden die Simulationsmodule 6 nur zum entfernten Proxy des Simulationsmoduls 30. Archivierte Prozessdaten sind - wenn sie angefordert werden - automatisch vom Simulationsmodul 30 verfügbar für die Anwendungen 32, den SCADA-Prozessdatenserver 31 und die Simulationsmodule 6. Anwendungen 2 der SCADA-Clients 1 haben durch das jeweilige Simulationsmodul 6 und den jeweiligen-SCADA-Prozessdatenclient 4 Zugang zu Simulationsdaten, wobei der SCADA-Prozessdatenclient 4 in diesem Fall auch als entfernter Proxy des SCADA-Prozessdatenservers 31 arbeitet. Jeder SCADA-Client 1 hat Zugang zu den selben Simulationsdaten, die im SCADA-Simulationsserver 34 verfügbar sind. Daher haben viele Benutzer zugleich Zugang zu den selben Simulationsprozessdaten.

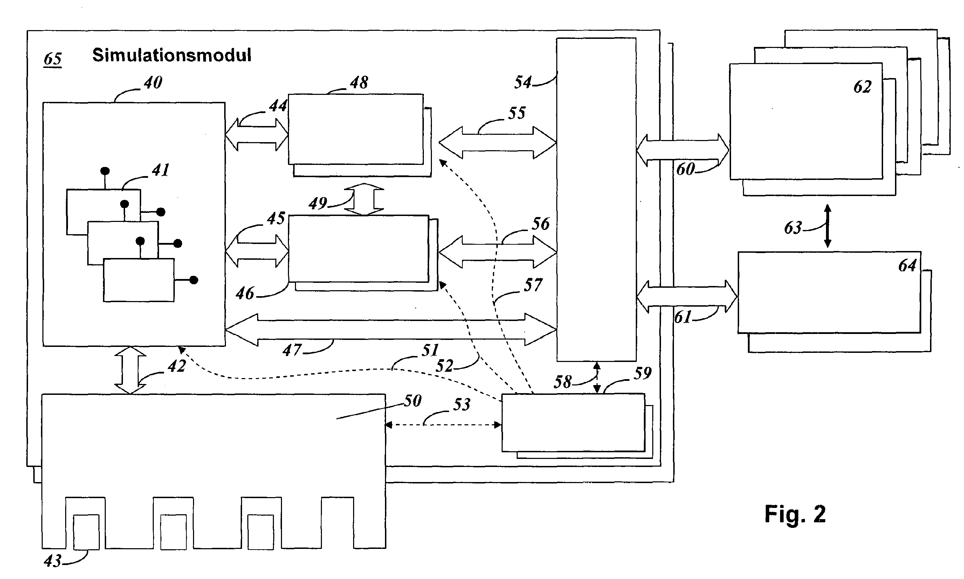

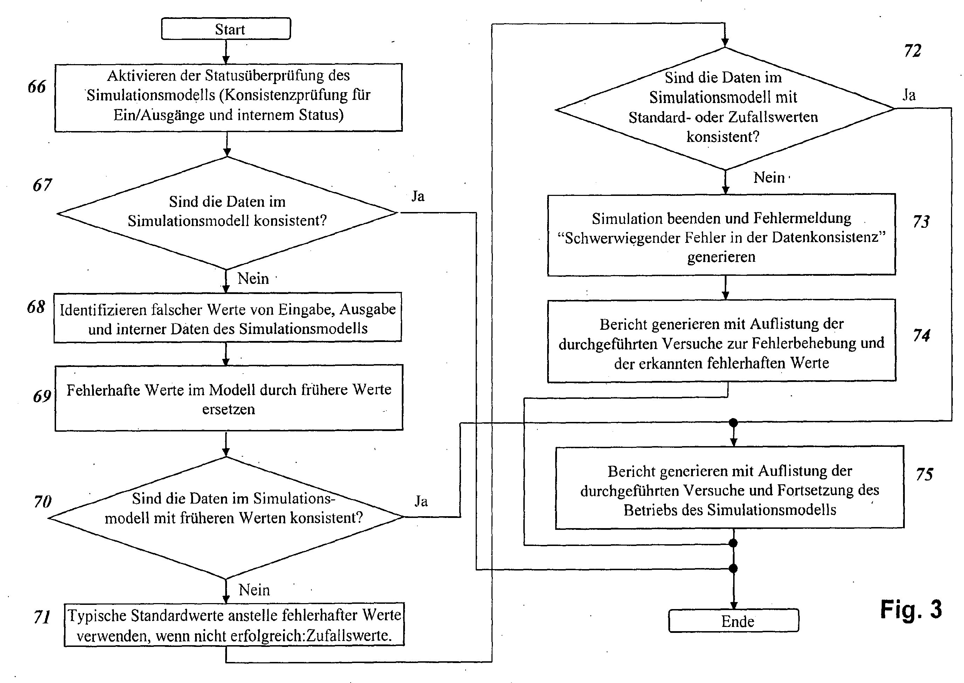

Fig. 2 zeigt die Architektur eines Simulationsmoduls 65, das den zuvor beschriebenen Simulationsmodulen 6, 17 oder 30 des SCADA-Systems entspricht. Das Simulationsmodul 65 enthält folgende Komponenten: ein Simulationsmodell 40, das den zu steuernden Prozess simuliert, wobei Software-Objekte 41 benutzt werden, wie z. B. Instanzen von Klassen einer objektorientierten Programmiersprache wie Java oder C++.; eine Simulations-Engine 48, die eingerichtet ist zur Berechnung von Prozesswerten und zum Arbeiten mit den Software-Objekten 41; einen Simulationsdaten-Cache 46, der externen Komponenten einen schnellen Lese- und Schreib-Zugang zu aktuellen Simulationsdaten ermöglicht; und einen Simulations-Manager 59, der dafür eingerichtet ist, die Arbeit der Komponenten des Simulationsmodells 40 zu konfigurieren und zu steuern, wie in Fig. 2 durch gestrichelte Linien 51, 52, 53, 57 und 58 dargestellt ist. Der Simulations-Manager 59 implementiert Algorithmen zur Fehlerbehebung im Rahmen der Konsistenzprüfung des Simulationsmodells 40 (vergl. Fig. 3 bezüglich Einzelheiten). Die Simulations-Engine 48 verarbeitet die Simulationsdaten des Simulationsmodells 40 und führt in einem vorgegeben Zyklus bestimmte Berechnungen durch. Zur Vervollständigung der Berechnung der Simulationsdaten werden diese in SCADA-Anwendungen 62 ergänzt durch z. B. Prozessgraphiken und Alarmlisten, damit ein Bediener mit dem Simulationsmodell 40 über gängige graphische Schnittstellen und Umgebungen arbeiten kann. Die Gestaltung des Simulationsmodells 40 basiert auf allen verfügbaren relevanten Informationen über die Anlagen-Einrichtungen und den zu simulierenden Prozess. Jedes Ventil, jeder Schalter oder Kompressor usw. wird mit seiner jeweiligen Charakteristik identifiziert, und als Software-Objekt 41 im Simulationsmodell 40 dargestellt.

Zusätzlich enthält das Simulationsmodul 65 zwei APIs (Application Programming Interfaces): ein mit Bezugszeichen 50 bezeichnetes API für externe Simulationsanwendungen, und ein mit 54 bezeichnetes API für den Zugriff auf Simulationsdaten und die Simulationssteuerung. Externe Simulationsanwendungen 43 können Simulationsdaten vom bzw. zum Simulationsmodell 40 lesen bzw. schreiben. Das API für externe Simulationsanwendungen 50 bietet über eine Verbindung 42 einen Standard-Zugriff auf das Simulationsmodell 40. Das API für den Zugriff auf Simulationsdaten und die Simulationssteuerung 54 ermöglicht einen Standard-Zugriff auf die Funktionalität des Simulationsmoduls 65. SCADA-Anwendungen 62 und die SCADA-Prozessdatenquelle 64, die im SCADA-Client 1 oder SCADA-Server 14 (siehe Fig. 1) angeordnet sind, haben somit Zugriff auf Funktionen des Simulationsmoduls 65 über Verbindungen 60 und 61. SCADA-Anwendungen 62 haben über eine Verbindung 63 Zugriff auf Simulationsdaten der SCADA-Prozessdatenquelle 64. Ein Zugriff ist auch direkt über die Verbindung 60 auf das Simulationsmodul 65 möglich. Die SCADA-Prozessdatenquelle 64 ist über die Verbindung 61 mit dem Simulationsmodul 65 verbunden, und durch das API für den Zugriff auf Simulationsdaten und die Simulationssteuerung 54 ist ein Zugriff auf Simulationsdaten des Simulationsmodells 40 direkt über eine Verbindung 47, sowie auf Daten des Simulationsdaten-Cache 46 über eine Verbindung 56 ermöglicht. Das API für den Zugriff auf Simulationsdaten und die Simulationssteuerung 54 ermöglicht auch einen Zugriff auf Funktionen der Simulations-Engine 48 über eine Verbindung 55. Über Verbindungen 44, 45, und 49 kommunizieren Simulationsmodell 40, Simulations-Engine 48 und Simulationsdaten-Cache 46 miteinander.

Die hier beschriebene Architektur des Simulationsmoduls 65 bietet durch die Anordnung des Simulationsdaten-Cache 46 einen schnellen Zugriff auf Simulationsdaten, und eine einfache Konfiguration der Simulationsmodi von SCADA-Anwendungen unter Verwendung von Standard-APIs 50 und 54. Neue Einrichtungen des Prozesses können auf einfache Weise hinzugefügt werden, und ältere Einrichtungen des gesteuerten Prozesses können leicht geändert, ersetzt oder entfernt werden, da alle simulierten Objekte des Prozesses als Software-Objekte 41 im Simulationsmodell 40 dargestellt sind.

In Fig. 3 ist ein Algorithmus zur Fehlerbehebung dargestellt, der im Simulations-Manager 59 des Simulationsmoduls 65 (siehe Fig. 2) implementiert ist. Die Routine beginnt mit Block 66, wenn eine Überprüfung des Zustands des Simulationsmodells durch den Simulations-Manager 59 aktiviert ist. Diese Statusprüfung regt die Konsistenzprüfung der Ein- und Ausgänge des Simulationsmodells und interner Werte an. Im Block 67 entscheidet der Simulations-Manager ob die Daten des Simulationsmodells konsistent sind. Wenn die Simulationsdaten konsistent sind unterbricht der Simulations-Manager nicht den normalen Ablauf im Simulationsmodell. Wenn die Daten nicht konsistent sind, versucht der Simulations-Manager im Block 68 fehlerhafte Werte von Eingangs- oder Ausgangsdaten oder interner Daten zu identifizieren. Im sich anschließenden Block 69 versucht der Simulations-Manager fehlerhafte Daten durch frühere Werte zu ersetzen, die temporär im Simulationsdaten-Cache 46 (siehe Fig. 2) gespeichert sind. Wenn der Simulations-Manager 59 im folgenden Block 70 feststellt, dass der Versuch erfolgreich war, also jetzt Datenkonsistenz gegeben ist, so setzt er den Ablauf mit dem Block 75 fort, in welchem ein Bericht über durchgeführte Versuche zur Fehlerbehebung generiert wird, und setzt den Betrieb des Simulationsmodells fort. Falls im Block 70 festgestellt wird, dass der Versuch noch nicht erfolgreich war, versucht der Simulations-Manager 59 im Block 71 durch Verwendung typischer Standardwerte im Simulationsmodell Datenkonsistenz zu erreichen. Stellt der Simulations-Manager 59 im darauf folgenden Block 72 fest, dass nun Datenkonsistenz erreicht ist, so wird der Ablauf mit dem bereits erläuterten Block 75 fortgesetzt. Wird im Block 72 keine Datenkonsistenz festgestellt, stoppt der Simulations-Manager 59 die Simulations-Engine 48 (siehe Fig. 3) und generiert im Block 73 eine Nachricht, die an alle SCADA-Anwendungen geht, die Simulationsdaten verwenden, und besagt, dass ein schwerwiegender Fehler bezüglich Datenkonsistenz eingetreten ist. Im Block 74 generiert dann der Simulations-Manager 59 einen Bericht über die durchgeführten Versuche, und listet alle Prozessdaten der Ein- und Ausgänge sowie interne Daten auf, die ursächlich für die Dateninkonsistenz sein könnten.

Mit der Verwendung des dargelegten Algorithmus zur Fehlerbehebung wird eine hohe Stabilität des Simulationssystems erreicht, da häufig keine Unterbrechung der Simulation erforderlich wird.

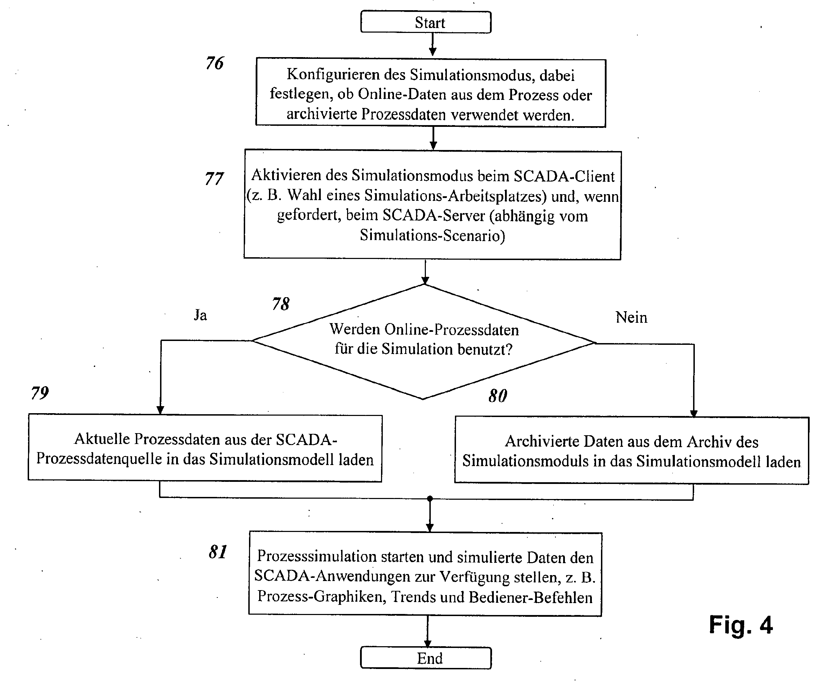

In Fig. 4 ist ein Algorithmus zur Initialisierung des Simulationsmodus im SCADA-System dargestellt. Die Routine startet mit einem Block 76, der es einem Benutzer ermöglicht zu konfigurieren, welchen Simulationstyp er benutzen möchte. Dabei hat der Benutzer die Wahl zwischen Simulationsmodi mit den letzten Online-Daten aus dem SCADA-Server 14 oder mit archivierten Prozessdaten, die auf der Festplatte gespeichert sind. Archivierte Simulationsdaten können aufgrund eines Befehls des Simulations-Managers 59 in das Simulationsmodell 40 geladen werden. Im sich anschließenden Block 77 kann der Benutzer den Simulationsmodus beim SCADA-Client 1 aktivieren durch Starten eines Simulationsarbeitsplatzes mit eingebetteten SCADA-Anwendungen, durch den das Simulationsmodul im SCADA-Client 1, und, wenn angefordert, beim SCADA-Server 14 initialisiert wird, soweit Scenario b) oder c) verwendet wird (vergl. obige Beschreibung der Fig. 1). Im Block 78 stellt der Simulations-Manager 59 fest, welcher Simulationsmodus vom Benutzer gewählt Wurde. Wenn es ein Modus mit Online-Prozessdaten ist, wird der Simulations-Manager 59 gemäß Block 79 veranlassen, dass aktuelle Prozessdaten in das Simulationsmodell 40 geladen werden, oder im anderen Fall, gemäß Block 80, dass auf der Festplatte gespeicherte Archiv-Prozessdaten in das Simulationsmodell 40 geladen werden. Danach veranlasst der Simulations-Manager 59 gemäß Block 81, dass die Simulations-Engine 48 (s. Fig. 2) mit der Berechnung von Simulationsdaten beginnt, um diese externen Anwendungen oder SCADA-Anwendungen, wie z. B. Prozessgraphiken oder Trends verfügbar zu machen.

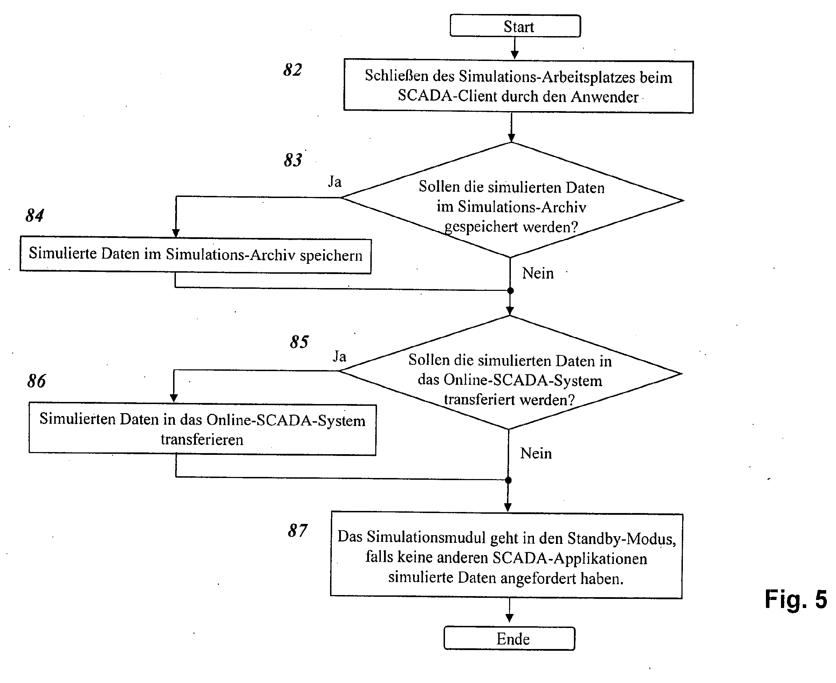

Fig. 5 zeigt einen Algorithmus zum Beenden eines Simulationsmodus im SCADA-System. Die Routine beginnt mit einem Block 82, wobei der Benutzer versucht, den Simulationsarbeitsplatz zu schließen. Gemäß Block 83 hat der Benutzer die Wahl die berechneten Simulationsdaten im Simulationsarchiv zu sichern, was dann gemäß Block 84 erfolgt, oder nicht zu sichern. Im Block 85 kann der Benutzer wählen, ob er alle oder einen Teil der Simulationsdaten, wie z. B. Steuerungssequenzen oder im Simulationsmodus veränderte Verriegelungsregeln zum Online-SCADA-System transferieren möchte. Der Transfer wird dann gemäß Block 86 durchgeführt. Im Block 87 geht der Simulationsmodus schließlich in den Standbymodus, soweit keine andere SCADA-Anwendung Simulationsdaten angefordert hat.

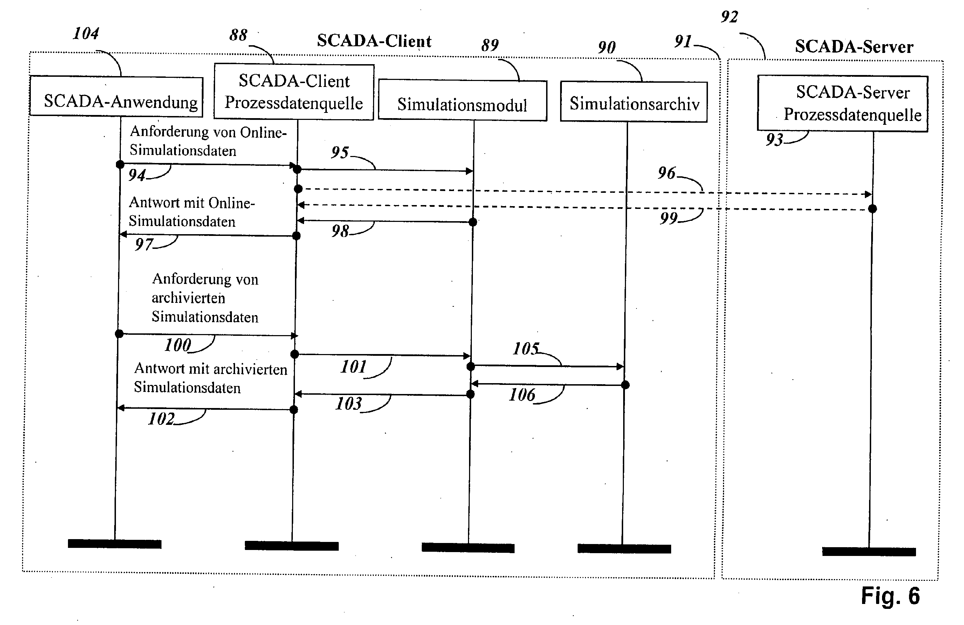

Fig. 6 zeigt ein sequenzielles Diagramm, das die Verfügbarkeit von Simulationsdaten in SCADA-Anwendungen 104 (diese entsprechen den Anwendungen 2 der Fig. 1) in SCADA-Clients 91 (diese entsprechen den SCADA-Clients 1 der Fig. 1) beschreibt. Dabei sind in Fig. 6 zwei Scenarien dargestellt. Im ersten Szenario fordert wenigstens eine Anwendung 104 Online-Simulationsdaten über eine Verbindung 94 bei einer Prozessdatenquelle 88 des SCADA-Clients 91 an, also Simulationsdaten, die auf dem letzten Stand der Prozessdaten basieren. Die Prozessdatenquelle 88 sendet daraufhin eine Simulationsdaten-Anforderung 95 zu einem Simulationsmodul 89. Sobald die angeforderten Daten verfügbar sind, sendet das Simulationsmodul 89 eine Antwort 98 an die Prozessdatenquelle 88 zurück, und diese schickt eine Antwort 97 an die Anwendung 104 zurück. Im zweiten Scenario fordert eine Anwendung 104 über eine Verbindung 100 archivierte Simulationsdaten bei der Prozessdatenquelle 88 an, also Simulationsdaten, die auf archivierten Prozessdaten basieren. Die Prozessdatenquelle 88 sendet daraufhin eine Anforderung 101 von archivierten Simulationsdaten zum Simulationsmodul 89. Das Simulationsmodul 89 sendet daraufhin eine entsprechende Anforderung 105 an ein Simulationsarchiv 90, um archivierte Simulationsdaten abzurufen. Das Simulationsarchiv 90 sendet eine Antwort 106 zurück, das Simulationsmodul 89 schickt dann eine Antwort 103 an die Prozessdatenquelle 88, die wiederum eine Antwort 102 zur Anwendung 104 zurück sendet.

Wenn das SCADA-System im Online-Modus arbeitet, verläuft das erste Scenario sehr ähnlich ab, wie Fig. 6 zu entnehmen ist. Unterschiedlich ist lediglich, dass die Prozessdatenquelle 88 des Clients eine Anforderung 96 an eine Prozessdatenquelle 93 eines SCADA-Servers 92, statt zum Simulationsmodul 89 sendet, und von der Prozessdatenquelle 93 eine Antwort 99 an die Prozessdatenquelle 88 des Clients zurückgeschickt wird. Wie aus Fig. 6 ersichtlich ist, können sowohl Simulationsdaten, die auf aktuellen Prozessdaten basieren verwendet werden, als auch Simulationsdaten, die auf archivierten Prozessdaten basieren.

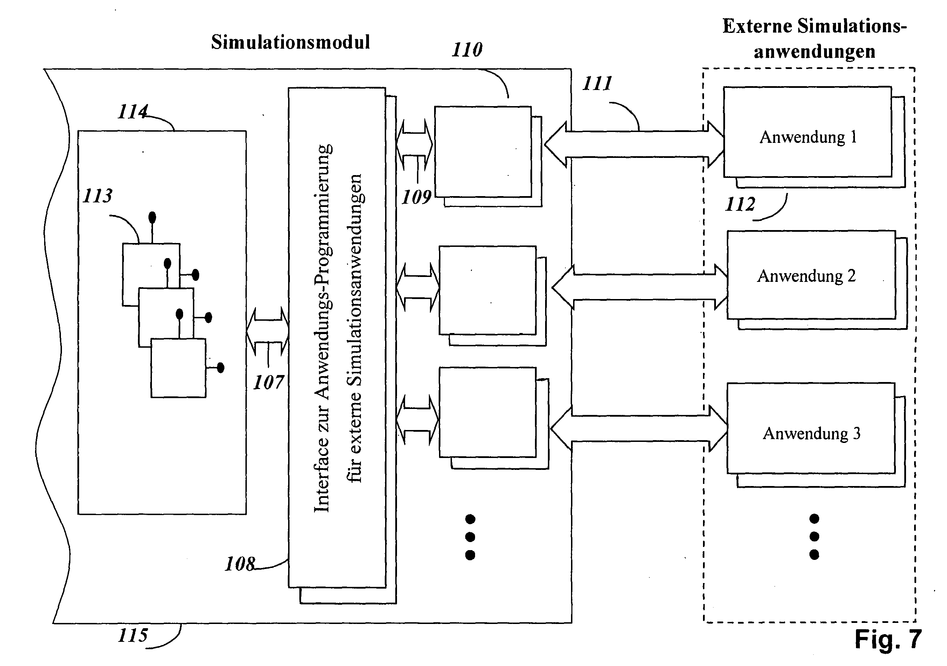

Fig. 7 zeigt, wie externe Simulationsanwendungen 112 in ein SCADA-Simulationsmodul 115 integriert werden können. Kernelement dieser Integration ist die Einführung von Simulationsdaten-Verbindungsmodulen 110 für jede der Simulationsanwendungen 112. Diese Verbindungsmodule 110 verwenden ein Standard-API für externe Simulationsanwendungen 108 für einen Zugriff auf ein Simulationsmodell 114 mit Software-Objekten 113, die reale Prozessobjekte repräsentieren. Simulationsdaten-Verbindungsmodule 110 unterstützen andererseits sowohl Standard- als auch spezielle APIs von externen Simulationsanwendungen 112, die über Verbindungen 111 Simulationsdaten zu den Verbindungsmodulen 110 übertragen. Die Verbindungsmodule 110 kommunizieren über Verbindungen 109 mit dem API 108. Über eine Standardverbindung 107 gelangen Simulationsdaten in das Simulationsmodell 114.

Fig. 7 demonstriert die Fähigkeit der Simulationsmodule, auf einfache Weise externe Simulationsanwendungen zu integrieren. Das gilt auch für Simulationsanwendungen fremder Systeme.

Es versteht sich, dass sich das erfindungsgemäße Simulationssystem und - Verfahren auch im Fall anderer Architekturen eines SCADA- bzw. Netzleitsystems, als im Beispiel dargestellt, anwenden lässt. Beispielsweise lässt sich das Simulationssystem auch in redundant ausgeführten Netzleitsystemen einsetzen. In solchen Architekturen können ein oder mehrere redundante SCADA-Server vorhanden sein.

## Patentansprüche

1. System zur Prozessdatensimulation in einem SCADA(Supervisory Control and Data Acquisition)-System, wobei
a) das SCADA-System wenigstens einen SCADA-Server (14) und wenigstens einen SCADA-Client (1) aufinreist, die über eine erste Netzwerk-Verbindung (10) miteinander verbunden sind, und Mittel (24, 26, 27, 28) zur Kommunikation mit Sensoren und Aktoren (29) eines zu steuernden Prozesses und zur Erfassung von Prozessdaten vorhanden sind,
b) alle vorhandenen SCADA-Server (14), und auch alle vorhandenen SCADA-Clients (1) jeweils ein Simulationsmodul (6, 17, 30, 65) enthalten, und
c) die Simulationsmodule (6, 17, 30, 65) jeweils Mittel (40) zur Simulation des zu steuernden Prozesses, Mittel (48) zur Berechnung von Prozesswerten, Mittel (46) zur Speicherung von Simulationsdaten, Mittel (59) zum Konfigurieren der Simulationsmittel (40), ein erstes API(Application Programming Interface) (50) für externe Simulationsanwendungen und ein zweites API (54) für den Zugriff auf Simulationsdaten und die Simulationssteuerung haben.

2. System zur Prozessdatensimulation nach Anspruch 1, **dadurch gekennzeichnet, dass** das SCADA-System Teil eines Netzleitsystems ist.

3. System zur Prozessdatensimulation nach einem der vorstehenden Ansprüche, **dadurch gekennzeichnet, dass** zusätzlich wenigstens ein SCADA-Simulationsserver (34) vorhanden ist, der ebenfalls ein Simulationsmodul (30) enthält, und der über eine zweite Netzwerk-Verbindung (9) mit dem wenigstens einen SCADA-Client (1) und über eine dritte Netzwerk-Verbindung (25) mit dem wenigstens einen SCADA-Server (14) verbunden ist.

4. System zur Prozessdatensimulation nach einem der vorstehenden Ansprüche, **dadurch gekennzeichnet, dass** die Simulationsmodule (6, 17, 30, 65) jeweils als Mittel (40) zur Simulation des zu steuernden Prozesses ein Simulationsmodell (40) enthalten, in dem Software-Objekte (41) benutzt werden.

5. System zur Prozessdatensimulation nach einem der vorstehenden Ansprüche, **dadurch gekennzeichnet, dass** die Simulationsmodule (6, 17, 30, 65) jeweils als Mittel (48) zur Berechnung von Prozesswerten eine Simulations-Engine (48) enthalten, die mit Software-Objekten (41) arbeitet.

6. System zur Prozessdatensimulation nach einem der vorstehenden Ansprüche, **dadurch gekennzeichnet, dass** die Simulationsmodule (6, 17, 30, 65) jeweils als Mittel (46) zur Speicherung von Simulationsdaten einen Simulationsdaten-Cache (46) enthalten, der externen Komponenten einen schnellen Lese- und Schreibzugang zu aktuellen Simulationsdaten ermöglicht.

7. System zur Prozessdatensimulation nach einem der vorstehenden Ansprüche, **dadurch gekennzeichnet, dass** die Simulationsmodule (6, 17, 30, 65) jeweils als Mittel (59) zum Konfigurieren der Simulationsmittel (40) einen Simulations-Manager (59) aufweist, der dafür eingerichtet ist, die Arbeit der Komponenten der Simulationsmittel (40), bzw. des Simulationsmodells (40) zu konfigurieren und zu steuern.

8. System zur Prozessdatensimulation nach einem der vorstehenden Ansprüche, **dadurch gekennzeichnet, dass** SCADA-Clients (1) jeweils neben dem Simulationsmodul (6) als weitere SCADA-Kernmodule Anwendungen (2) und einen Prozessdatenclient (4) für den Abruf aktueller Daten aus SCADA-Servern (14, 34) enthalten.

9. System zur Prozessdatensimulation nach einem der vorstehenden Ansprüche, **dadurch gekennzeichnet, dass** SCADA-Server (14, 34) außerdem als weitere Kernmodule eine Echtzeitdatenbank (20, 33), Anwendungen (19, 32), eine Verarbeitungseinheit (23, 35) und einen Prozessdatenserver (15, 31) enthalten.

10. Verfahren zur Prozessdatensimulation in einem SCADA(Supervisory Control and Data Acquisition)-System, das wenigstens einen SCADA-Server (14) und wenigstens einen SCADA-Client (1) in einem Rechnernetz aufweist, in denen jeweils ein Simulationsmodul (6, 17, 30, 65), das ein Simulationsmodell (40) enthält, enthalten ist, wobei
a) vom SCADA-Server (14) erfasste Prozessdaten gespeichert und zur Simulation des Verhaltens von Prozess-Objekten, sowie zur Berechnung von simulierten Prozessdaten verwendet werden,
b) in einem SCADA-Prozessdatenserver (15) des SCADA-Servers (14) sowohl aktuelle Prozessdaten, als auch simulierte Prozessdaten bereitgestellt werden, und
c) die im SCADA-System verteilt angeordneten Simulationsmodule (6, 17, 30, 65) auf Veranlassung durch einen Anwender ihren Status untereinander synchronisieren und die Wahl unterschiedlicher Simulationsmodi ermöglichen.

11. Verfahren nach Anspruch 10, **dadurch gekennzeichnet, dass** ein im SCADA-System zusätzlich vorhandener SCADA-Simulationsserver (34) sowohl mit allen vorhandenen SCADA-Servern (14), als auch mit allen vorhandenen SCADA-Clients (1) kommuniziert.

12. Verfahren nach Anspruch 10 oder 11, **dadurch gekennzeichnet, dass** zur Durchführung einer Statusüberprüfung und Fehlerbehebung im Simulationsmodell (40) eines Simulationsmoduls (6, 17, 30, 65)
- in einem ersten Schritt (67) geprüft wird, ob die Ein-/Ausgangsdaten und interne Daten im Simulationsmodell (40) konsistent sind,
- bei fehlender Konsistenz in weiteren Schritten (68, 69) fehlerhafte Werte identifiziert und durch gespeicherte frühere Werte ersetzt werden,
- falls in einem nächsten Schritt (70) ermittelt wird, dass damit Datenkonsistenz erreicht ist, in einem folgenden Schritt (75) ein Bericht über durchgeführte Versuche generiert und der Betrieb des Simulationsmodells (40) fortgesetzt wird,
- falls damit keine Datenkonsistenz erreicht ist, in einem nächsten Schritt (71) typische Standartwerte anstelle der fehlerhaften Werte verwendet werden, und in einem folgenden Schritt (72) erneut ermittelt wird, ob damit Datenkonsistenz erreicht ist,
- falls damit Datenkonsistenz erreicht ist, mit dem Schritt (75) fortgesetzt wird, in dem ein Bericht über durchgeführte Versuche generiert und der Betrieb des Simulationsmodells (40) fortgesetzt wird,
- falls auch damit keine Datenkonsistenz erreicht ist, in den letzten Schritten (73, 74) die Simulationsarbeit des Simulationsmodells (40) beendet, sowie eine Fehlermeldung und ein Bericht über durchgeführte Versuche generiert werden.

13. Verfahren nach einem der Ansprüche 10 bis 12, **dadurch gekennzeichnet, dass** zur Initialisierung eines Simulationsmodus im SCADA-System ein Algorithmus verwendet wird, bei dem, nachdem ein Benutzer festgelegt hat, ob Online-Daten aus einem zu steuernden Prozess oder archivierte Prozessdaten verwendet werden und ein Simulationsmodus beim SCADA-Client (1) aktiviert ist,
- ein Simulations-Manager (59) des Simulationsmoduls (6) in einem ersten Schritt (78) feststellt, welcher Simulationsmodus vom Benutzer gewählt wurde,
- wenn Online-Daten zu benutzen sind, der Simulations-Manager (59) im folgenden Schritt (79) veranlasst, dass aktuelle Prozessdaten in das Simulationsmodell (40) geladen werden, oder
- falls archivierte Prozessdaten zu benutzen sind, der Simulations-Manager (59) in einem alternativen Schritt (80) veranlasst, dass archivierte Prozessdaten in das Simulationsmodell (40) geladen werden, und
- im nächsten Schritt (81) der Simulations-Manager (59) veranlasst, dass Simulationsdaten berechnet und SCADA-Anwendungen zur Verfügung gestellt werden.
